# EUROPEAN PATENT SPECIFICATION

(11) **EP 0 650 843 B1**
(45) Date of publication and mention of the grant of the patent: **06.08.1997**
(21) Application number: 94116659.7
(22) Date of filing: 21.10.1994
(51) Int. Cl.: B41J 11/50, B41J 13/00

(54) **Multiple-function printer with common feeder/output path mechanisms**
Drucker für Mehrfachfunktionen mit gemeinsamen Ein/Ausgabeweg
Imprimante à fonctions multiples avec une trajectoire commune de sortie et d'alimentation

(30) Priority: 29.10.1993 US 145355
(43) Date of publication of application: 03.05.1995
(73) Proprietor: Hewlett-Packard Company, Palo Alto, California 94304 (US)
(72) Inventor: Stodder, Samuel A., Encinitas, CA 92024 (US); Stocker, Steven O., Excondido, CA. 92027 (US)
(74) Representative: Liesegang, Roland, Dr.-Ing.

(56) References cited:
- EP-A- 0 359 584
- EP-A- 0 485 098
- US-A- 4 397 542
- US-A- 4 522 382
- US-A- 4 758 862

## Description

### BACKGROUND OF THE INVENTION

This invention relates generally to printers and facsimile devices, and more particularly to printers and facsimile devices which are combined together to form a multiple-function product.

Facsimile devices (i.e., fax machines) have been used for many years to transmit documents containing text or graphical images through a modem via telephone lines through another modem to a remote destination. In its basic form, a conventional fax machine is used for three separate functions: sending a first document; receiving a second document; and producing a hardcopy printout of the second document. Of course the hardcopy printout is not the actual second document but rather a close facsimile thereof. Thus, sending the contents of the second document via fax avoids going to the trouble, expense and delay of actually delivering the second document to a remote destination.

An enhanced fax machine can also be used to perform two additional functions: producing a hardcopy printout of the first document; and producing a hardcopy printout of a cumulative report showing an itemized listing of date, time, and destination for first documents send from the fax machine.

It is therefore apparent that a fax machine acts primarily as both a sender (i.e., scanning and transmitting) and receiver of documents, and that the fax machine also acts secondarily as a printer (i.e., printing a facsimile of a second document, printing a copy of a scanned first document, or printing an itemized report) and secondarily as a convenience copier (i.e., scanning/printing a first document).

Both the basic fax machine and the enhanced fax machine just described have used two separate paper paths. One path is dedicated to the first document and typically includes document feeder tray, document paper pick/paper drive system, document scanning station, and document output. Another path is dedicated to the printout (originally roll-fed, now sheet-fed) and typically includes sheet feeder tray, sheet paper pick/sheet drive system, sheet printing station, and sheet output. As a result, a fax machine is a bulky, expensive multiple-function device which retires a large number of parts for duplicate paper handling functions.

### BRIEF SUMMARY OF THE INVENTION

It is an object of the present invention to provide a fax machine with common feeder/output mechanisms for documents passing through a scanning station and for sheets passing through a printing station.

Another important object is to provide a multiple-function printer/fax machine which is primarily a printer peripheral for a computer as well as primarily a fax machine, having integrated shared paper path and common mechanisms for scanning documents on the one hand and for producing hardcopy printout sheets on the other hand.

Still another object is to provide a multiple-function printer/fax machine with a pressure plate feeder scheme which will enable fast reliable automatic feeding of a large stack of documents up to about twenty-five pages as well as a large stack of printout sheets up to about one hundred pages. A related object is to provide dual feeder paths into a common paper pick, with self-actuating shifting means for automatically changing from a printing mode to a scanning mode whenever a document is placed in an automatic document feeder tray.

A further object is to provide a multiple function machine having a single drive motor for picking individual pages from a stack and for moving individual pages past each processing station such as a scanning station and/or a printing station. A related object is to provide gear means from the single drive motor for driving a primary drive roller, a paper pick roller, and an output roller at different rates, and for moving a feeder pressure plate to and fro between positions of engagement and disengagement.

An additional object is to provide the aforementioned multiple function machine with a self-actuating delay mechanism for spacing apart individual pages which are sequentially picked from a document stack or a printout sheet stack.

In one embodiment of the invention, the common document/sheet path and shared mechanisms include a pressure plate, pick roller assembly, drive roller system, and drive motor wherein documents proceed actively through a scanner station and passively through a printer station and printout sheets proceed passively through the scanner station and actively through the printer station, both to a common output. In one alternate embodiment of the invention, the common document/sheet path and shared mechanisms include a drive roller system and output, wherein documents proceed actively through a scanner station and passively through a printer station and printout sheets bypass the scanner station and proceed actively through the printer station, both to a common output. In another alternate embodiment of the invention, the common document/sheet path and shared mechanisms include a common path through a main drive roller system, a combined scanner/printer station and output, with separate pick rollers and separate pressure plates driven by the drive motor for the main drive roller system.

### BRIEF DESCRIPTION OF THE DRAWINGS

FIG. 1 is a schematic side view of a presently preferred printer/facsimile embodiment of the present invention;
FIG. 2 is a functional block diagram of the embodiment of FIG. 1;
FIG. 3 is an isometric view looking down into an implementation of the embodiment of FIG. 1;
FIG. 4 is a fragmentary isometric view showing the input feeder slots and pick roller portion of FIG. 3;
FIG. 5 is a front isometric view of FIG. 3;
FIG. 6 is a side view of FIG. 3;
FIG. 7 is a fragmentary back view looking up at the feeder slots and pick roller portion of FIG. 4;
FIG. 8 is a close-up schematic showing a pick roller ready to begin a reverse rotation kicking partially picked sheet(s) backward into the ASF as a result of a document stack being inserted into the ADF;
FIG. 9 is a close-up schematic showing the pressure plate in disengaged position and all of the partially picked sheets expelled from underneath the pick roller into the ASF;
FIG. 10 is a close-up schematic showing the pressure plate returned to an engaged position with the pick roller already commencing to pick a page from the top of the stack of documents which now partially overly the stack of print sheets;
FIG. 11 is a schematic side view of an alternate printer/facsimile embodiment of the present invention;
FIG. 12 is a functional block diagram of the embodiment of FIG. 11; and
FIG. 13 is a functional block diagram of another alternate printer/facsimile embodiment of the present invention.

### DETAILED DESCRIPTION OF THE PREFERRED EMBODIMENTS

Generally speaking, the invention provides for picking pages from a stack of sheets in an input feeder for roller-driven movement along a first path through a printing station to an output, and for picking pages from a stack of documents in an input feeder for roller-driven movement along a second path through a scanning station to an output. Depending on the particular implementation, at least a portion of the first and second paths are commonly shared, and common mechanisms are used for various steps such as for picking, providing roller-driven movement through the processing stations, and for actuating a pressure plate in the input feeders.

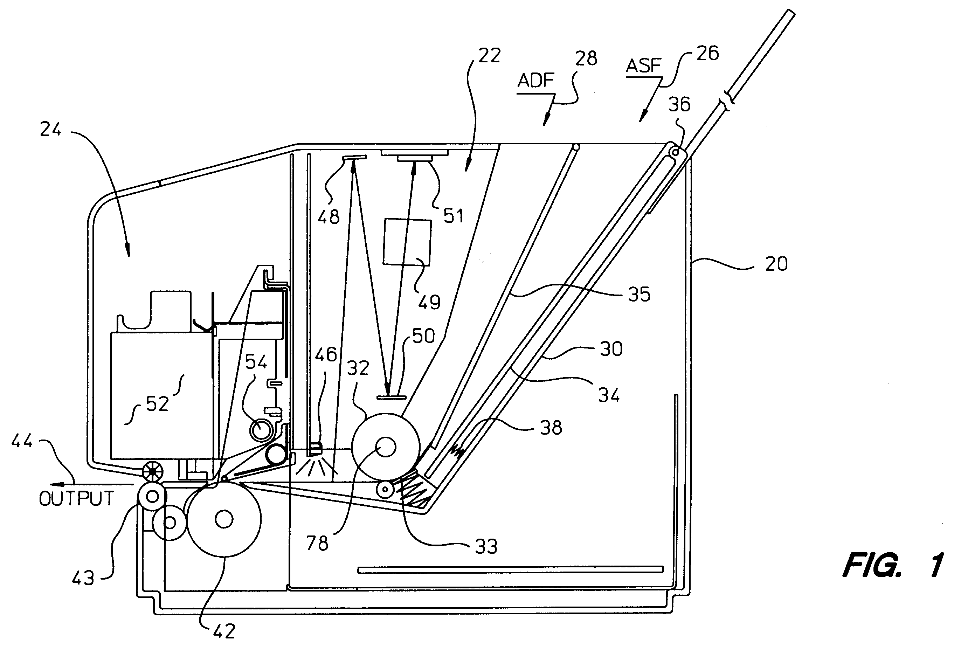

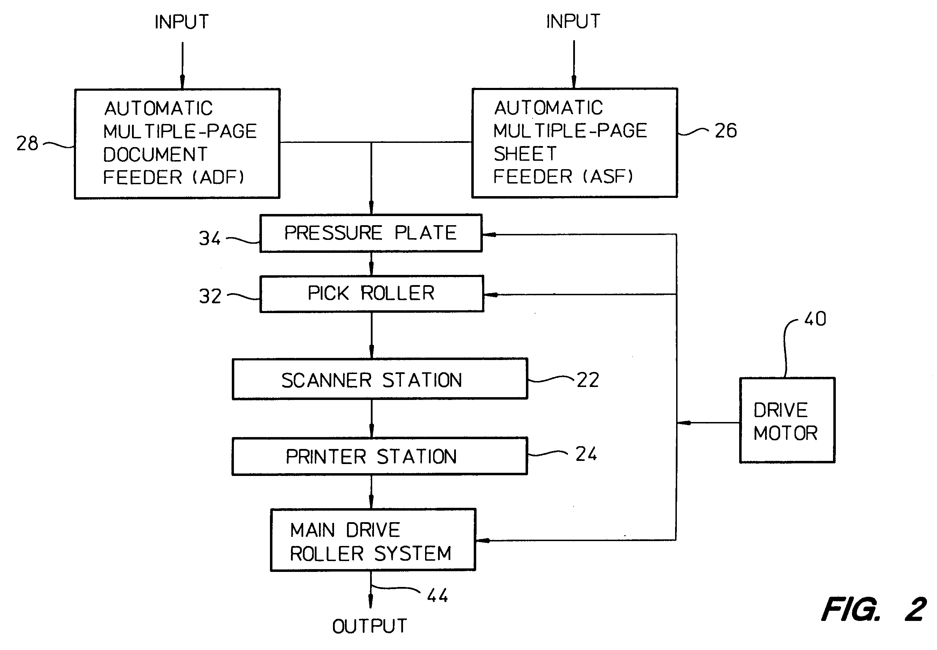

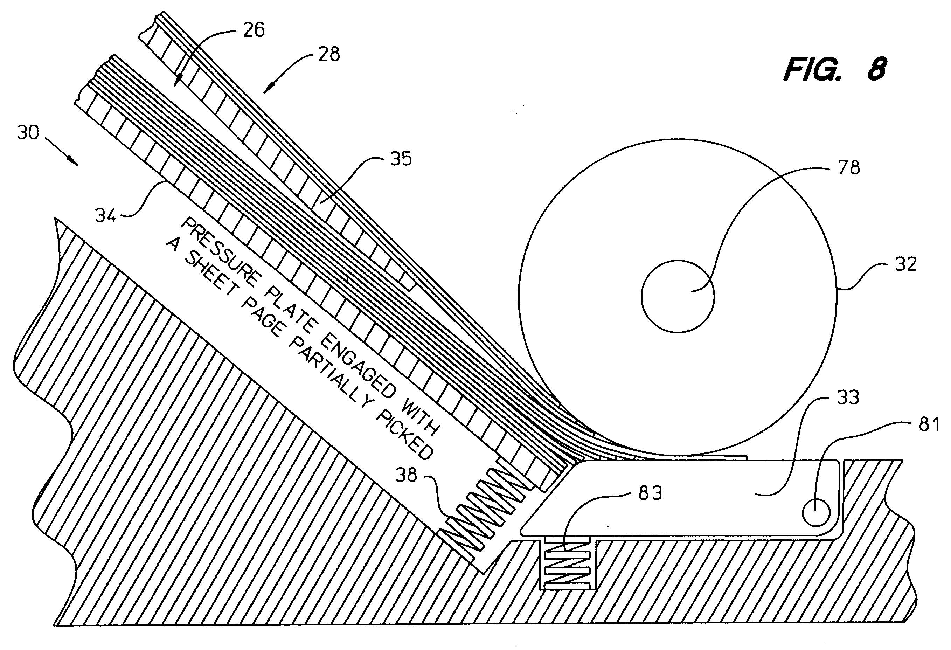

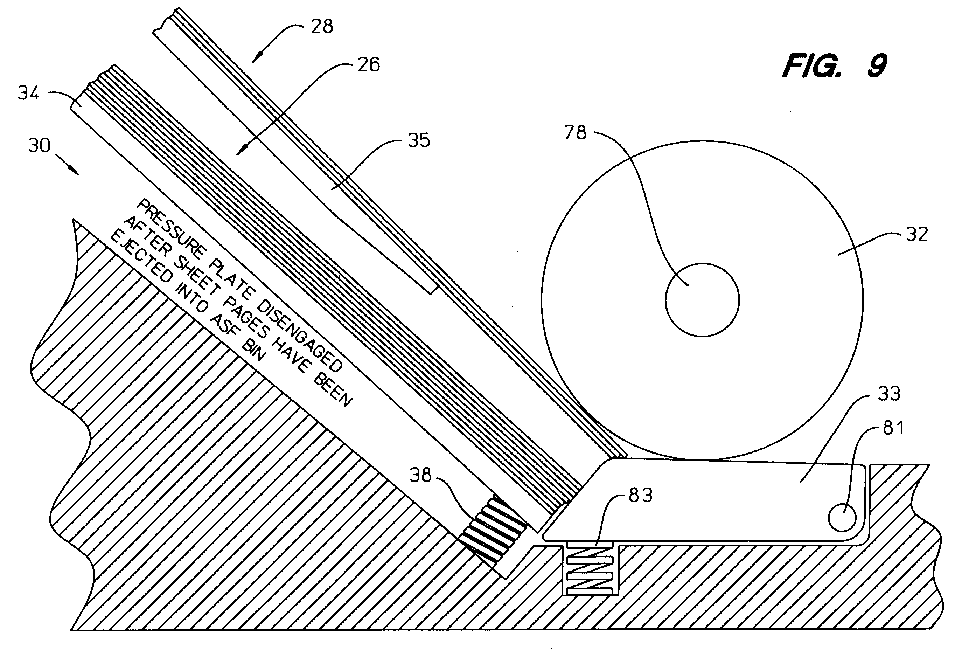

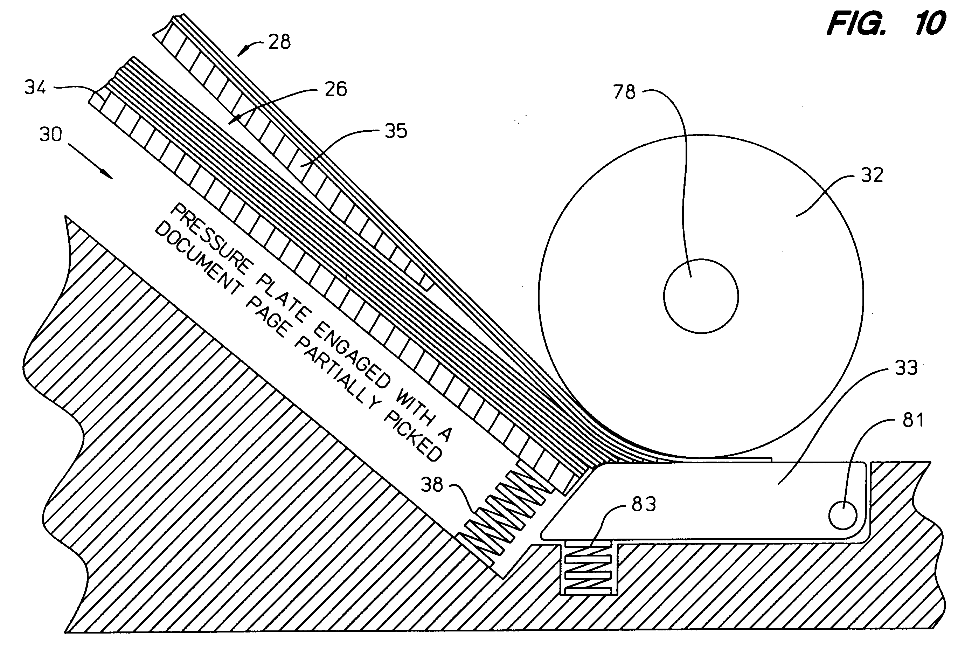

Referring more particularly to Figs. 1-2, the multiple-function device of the presently preferred embodiment includes a frame 20 for housing a scanner station 22 and a printer station 24. A stack of print sheets is loadable into an automatic sheet feeder (ASF) 26, and a stack of documents having text/graphics to be scanned is loadable into an automatic document feeder (ADF) 28 which together form a common input feeder slot 30 having a pick roller 32 and a spring-loaded stripper pad 33 at the lower end. The upper portion of the input feeder slot which constitutes the ADF is separated from the ASF by a divider 35. The divider is truncated at its lower end to allow document stacks and sheets stacks to converge at the pick roller (see Figs. 8-10) . A pressure plate 34 is attached at its upper end through pivot pin 36 to the frame and is normally biased upwardly against the pick roller by springs 38. A drive motor 40 is connected through a gear mechanism to the pressure plate 34 and pick roller 32 as described in more detail hereinafter, and is also connected to a main drive roller 42 which pulls the pages through the processing stations for either scanning or printing. The printout pages as well as the scanned pages pass across an output roller 43 to be deposited in a common output area 44.

The scanner and printer stations in the drawings are for purposes of illustration only and are of conventional design, except for their unique locations along a shared path using shared mechanisms. In that regard, scanner station 22 includes a lamp 46 for illuminating a scanning zone, reflective mirrors 48, 50, a lens 49, and a CCD (charge-coupled device) photosensor 51. Printer station 24 includes inkjet cartridge 52 which rides on a slider rod 54 back and forth across a print zone.

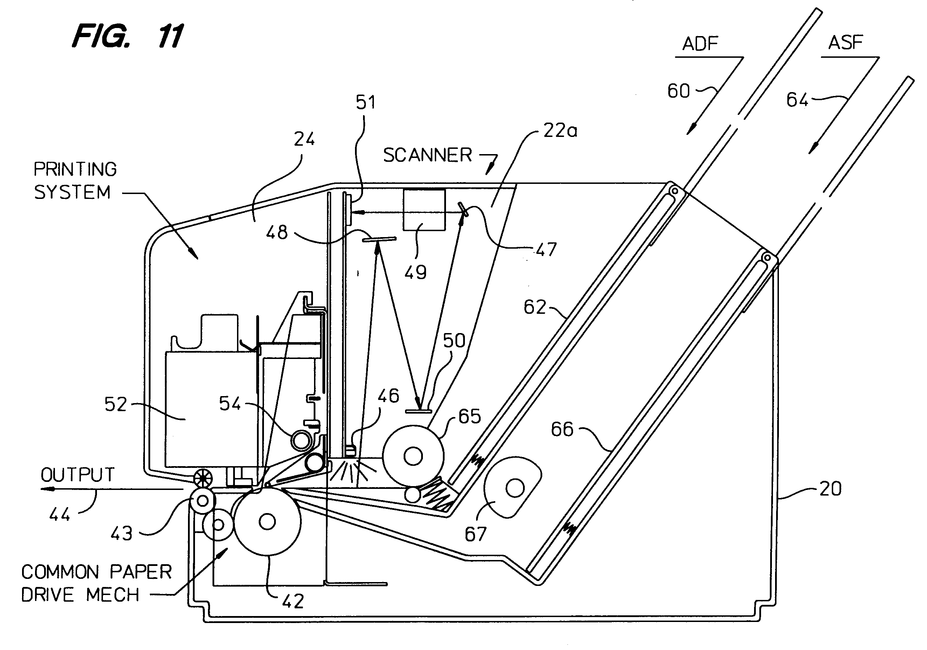

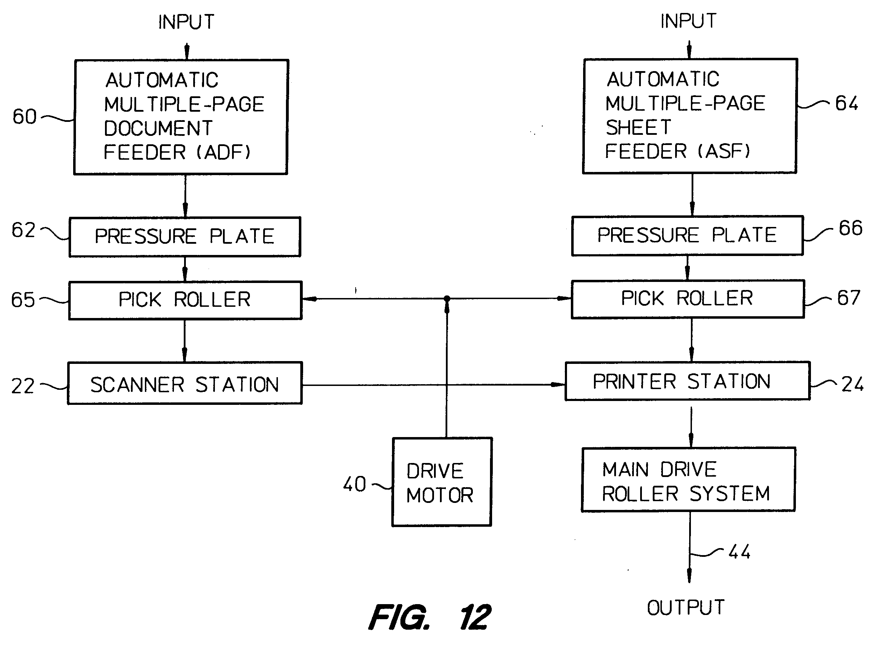

In the alternate embodiment of Figs. 11-12, the common document/sheet path and shared mechanisms are similar to Figs. 1-2 and include scanner station 22a, printer station 24, drive motor 40, main drive roller 42, output roller 43 and a shared output 44 wherein document pages proceed actively through the scanner station and passively through the printer station, and printout sheet pages bypass the scanner station and proceed actively through the printer station, both to a common output. However, ADF 60 has its own pivotally mounted spring-loaded pressure plate 62 to facilitate reliable page feeding to document pick roller 63, and ASF 64 has its own pivotally mounted spring-loaded pressure plate 66 to facilitate reliable page feeding to sheet pick roller 67, with both pick rollers 65, 67 being driven by the drive motor 40.

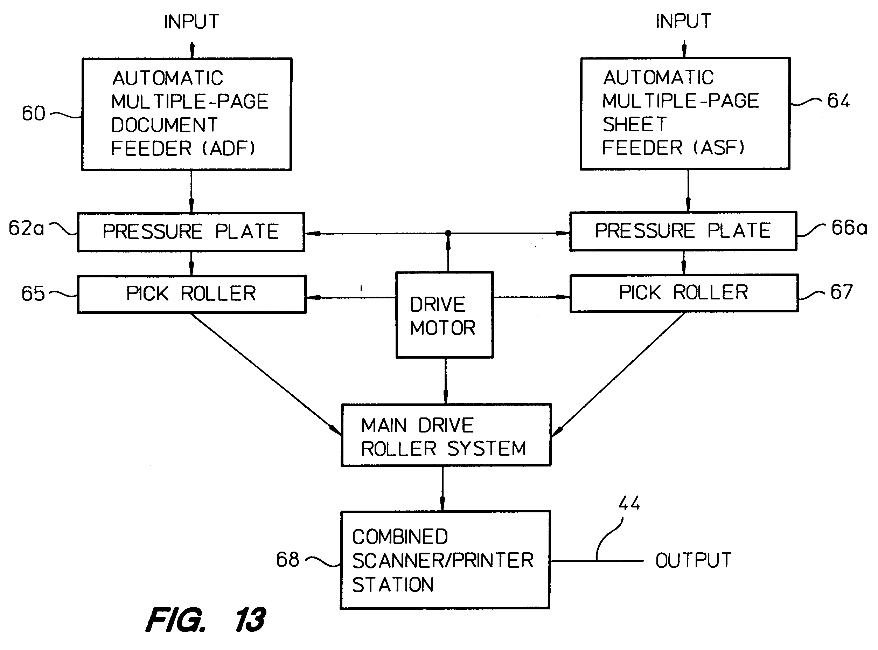

In another alternate embodiment of Fig. 13, the common document/sheet path and shared mechanisms are similar to Figs. 11-12. But this alternate embodiment provides a common path through a combined scanner/printer station 68 to a common output 44, with separate pick rollers 65, 67 and separate pressure plates 62a, 66a driven by the drive motor 40 for the main drive roller system.

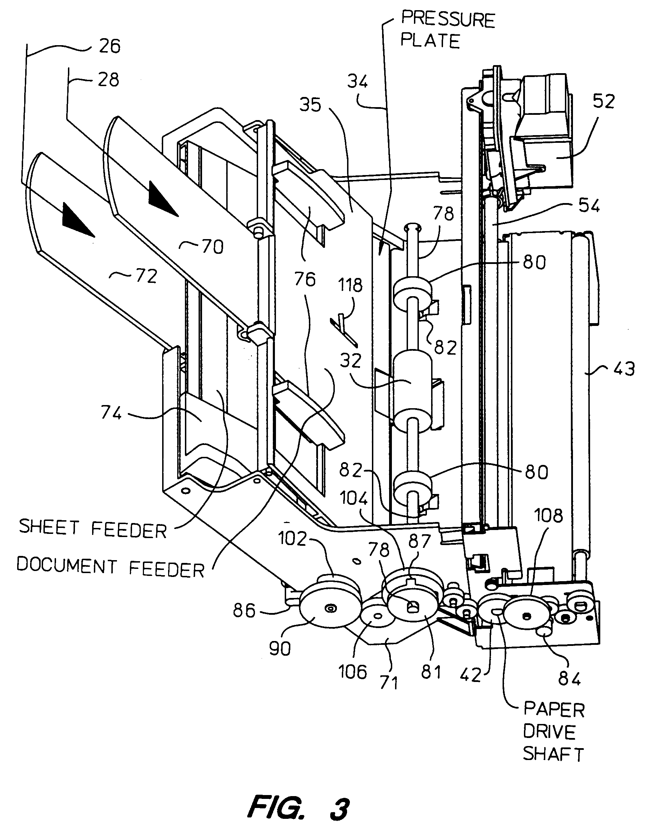

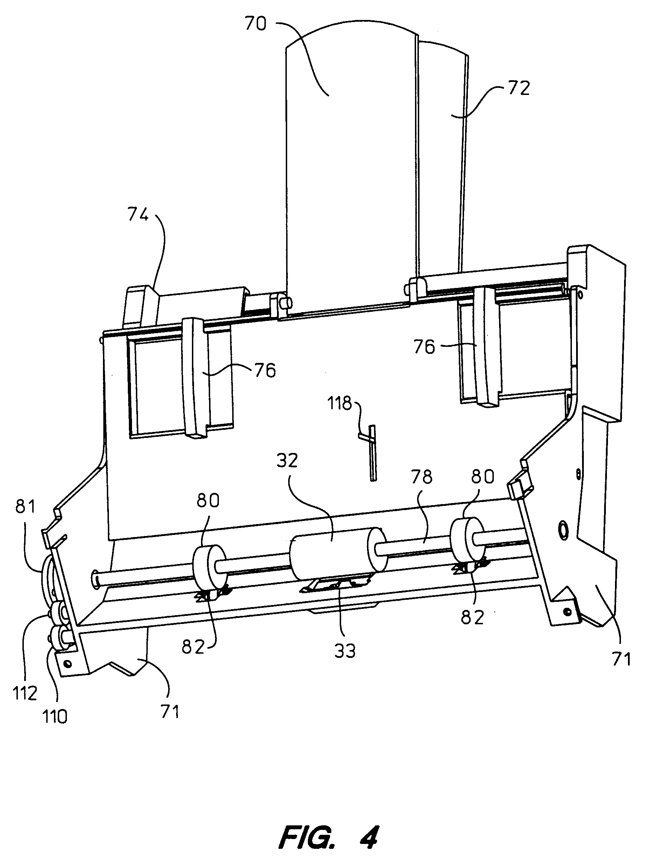

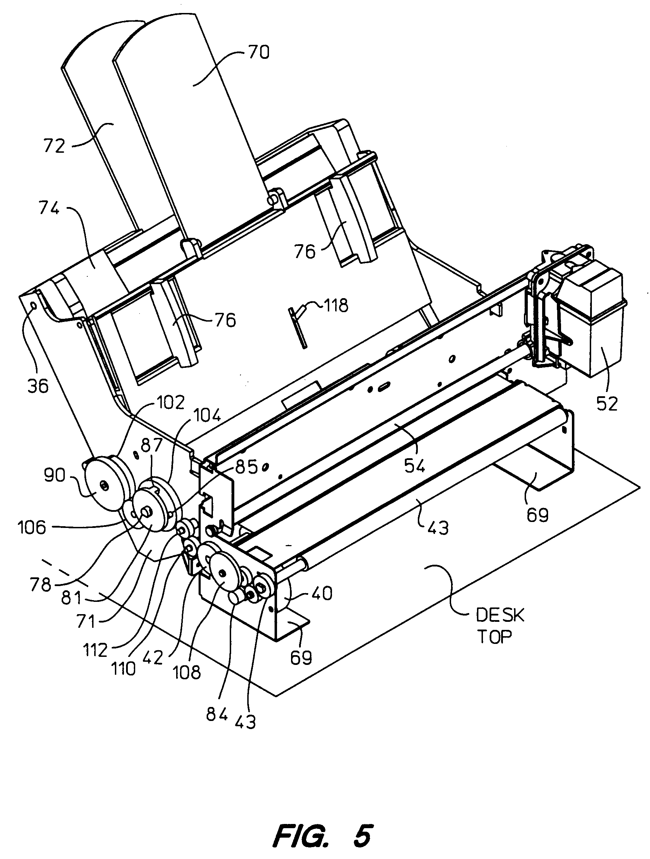

Referring now to Figs. 3-6 which show further details of the preferred embodiment of Figs. 1-2, the input feeder slot is integrated into the device so that when the unit is resting with its feet 69 on a desk top, stacks of sheets or documents can be added without having to remove any tray. Since the frame is supported by legs 71 so that the input feeder slot is angled downwardly, both of the stacks naturally settle to the bottom of the slot so that the leading edges of pages on top of the stacks will impinge against the pick roller (see Figs. 8-10). The action of the pressure plate against both stacks assures proper separation by the spring-loaded stripper pad 33 in combination with the rotation of the pick roller 32.

The ADF includes an extender 70 mounted on the upper end of the divider 35 which pivots forwardly out of the way when pages are added or removed from the ASF. The ASF is sandwiched between the ADF and the bottom of the feeder slot and includes its own extender 72 as well as a single adjustable guide 74 for maintaining the sheet stack in proper positioning for feeding into the pick roller.

It will be understood by those skilled in the art that proper feeding/picking of pages from a large quantity stack of virginal printing paper in the ASF is a somewhat easier task than proper feeding/picking of variously sized partially bent pages of stacked documents in the ADF having text/graphics thereon. Therefore the ADF is positioned above the ASF for better picking by the pick roller and easier access for accurate and proper loading between dual adjustable guides 76. The automatic action of the pressure plate 34 as described in more detail hereinafter also helps to assure proper feeding of pages from the ASF for printing or pages from the ADF for scanning.

The pick roller 32 is mounted on a pick shaft 78 which has a pair of guide rollers 80 also mounted thereon in the commonly shared paper path, as well as a double-pin delay coupler 81 mounted on the shaft end outside the frame. The guide rollers 80 and matching pinch rollers 82 help to hold the pages in proper position as they move past the pick roller to the scanning and printing stations.

A unique gear mechanism is shown in Figs. 3 and 6-7 for automatically moving the pressure plate to and fro between a disengaged position "open" position and an engaged "closed" position. The disengaged open position allows access to the stacks for removal, replenishment, or replacement of pages as well as for realignment of the stacks between one or more page picking events if that is deemed to be desirable and necessary to avoid misfeeds. More importantly from a multiple-function point of view (see Figs. 8-10), the disengaged open position allows new pages of documents to be placed in the ADF with their leading edges resting on top of the sheet stack in the ASF, thereby preparing for a scanning operation to commence.

The engaged closed position holds the sheet stack in aligned position together as a unit if there are not any documents in the ADF. This helps to prevent more than one page from being accidently picked. The engaged closed position holds the document stack in aligned position together as a unit if there are not any sheets in the ASF. If there is already a stack of sheets in the ASF and some additional document pages have been added to the ADF, then the engaged closed position holds both the document stack and the underlying sheet stack in aligned position together as a composite stack insofar as their leading edges are concerned.

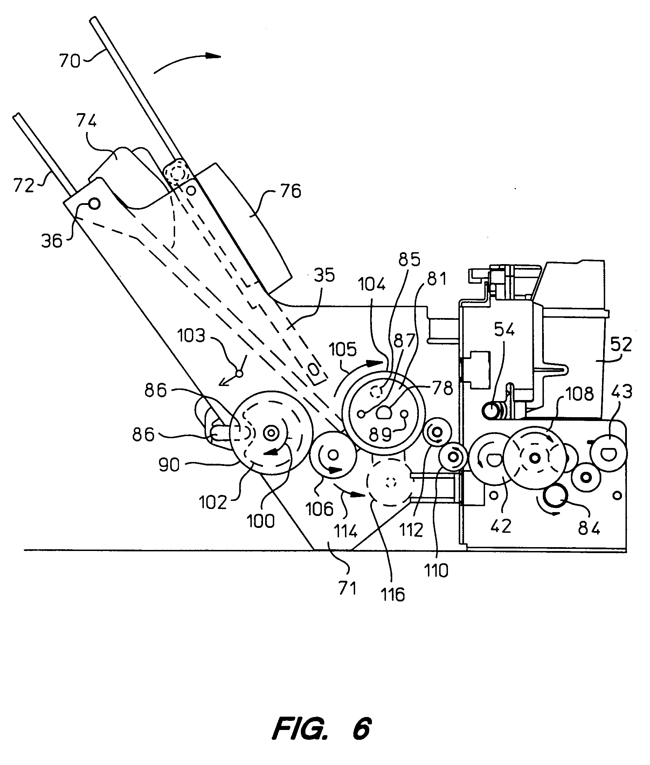

Fig. 6 shows the gear mechanism in a "start disengagement" position, with motor drive gear 84 moving in reverse direction to cause main drive roller 42 to also go in reverse. Coupling pin 85 on linkage gear 104 is partway between forward direction coupling pin 87 and rearward direction coupling pin 89 on delay coupler 81. This assures that commencing the reverse driving of the pick roller to expel partially picked pages does not occur until after the pressure plate has been moved into disengagement position.

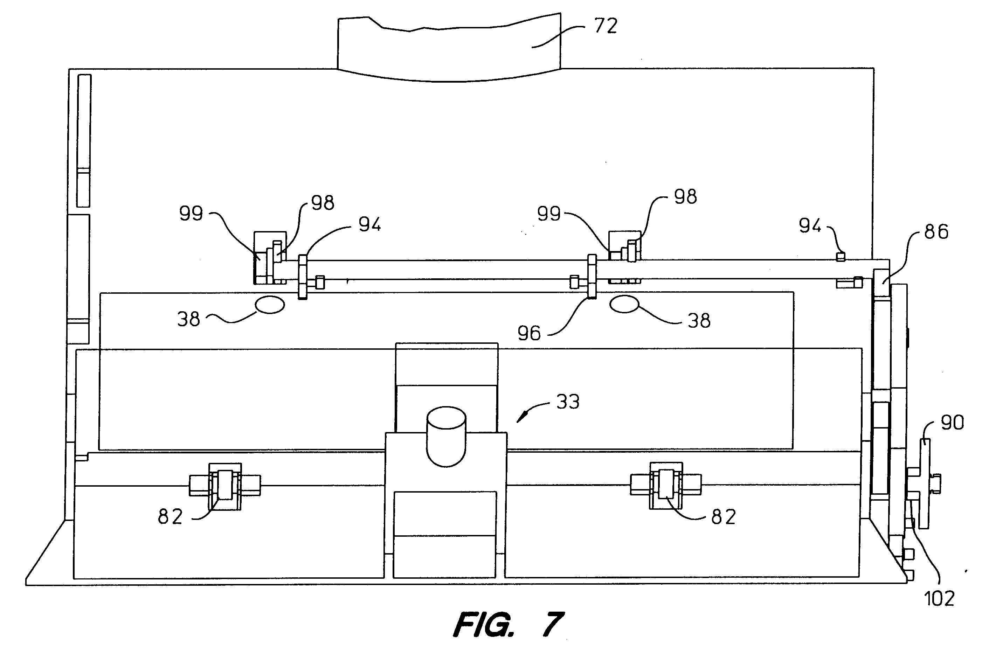

Cam follower 86 is resting in a notch on cam 88 which is rigidly mounted for turning with pressure plate gear 90. So long as cam follower 86 remains in the notch, the pressure plate remains in closed engagement position. The connection between cam follower 86 and the pressure plate is best shown in Fig. 7. The cam follower 86 is mounted on the end of a pivot rod 92 which is mounted for pivotal rotation by a pair of brackets 94 and a counter-bracket 96. A pair of fingers 98 are also mounted on pivot rod 92 and interconnect with matching slots 99 so that when the pressure plate gear 90 is rotated in direction 100, the cam follower is forced to pivot upwardly into "disengagement position" and ride along the larger diameter surface 102. This makes the entire pivot rod 92 rotate and causes the fingers 90 to pivot the pressure plate in direction 103 into a completely retracted position of disengagement in a direction away from the pick roller 32. When the pressure plate 90 has made a complete rotation, the cam follower rides back down into the notch, thereby allowing the pressure plate to return to an "engagement position".

A linkage gear 104 is slidably mounted on the pick shaft 78 to couple the drive motor 40 to the pressure plate gear 90, and also to couple the drive motor 40 through the double-pin delay coupler 81 to the pick roller. When the motor drive gear 84 is in reverse, the linkage gear rotates in direction 105 to move its attached transfer gear 106 into link position with the pressure plate gear 86. Thus the coupling from drive motor 40 to the pressure plate gear 90 is through double-wheel gear 108, main drive gear 42, spur gears 110, 112, linkage gear 104, and transfer gear 106. De-coupling occurs when the motor drive gear 84 changes back to forward, since this changes the rotation direction of linkage gear 104 and moves transfer gear 106 in the direction 114 to a non-link position 116. The foregoing gear/cam mechanism provides for automatic movement of the pressure plate between a position of engagement of the stacks with the pick roller and a position of dis-engagement. This necessarily occurs after a page being processed at the scanning station or the printing station has passed by the main drive roller 42 and the output roller 43 to the common output area 44.

The initiation of the dis-engagement can be programmed to occur at predetermined times such as before every picking step, or whenever a mis-feed occurs, or the like. Also, when a document page is placed in the ADF, it pushes down sensor 118 to activate the aforementioned dis-engagement sequence of steps.

As best shown in Fig. 6, the delayed contact of the pin 85 on linkage gear 104 with double-pin delay coupler, 81 causes the reversing of the pick roller expelling any pages from a previous picking step to occur after the pressure plate has moved to a position of dis-engagement.

As best shown in Figs. 6, the gearing mechanism is designed to automatically provide a delay between the picking of successive pages from the sheet stack or document stack. In that regard, the gearing ratios provide for output roller 43 to rotate faster than main drive roller 42 which rotates faster than pick roller 32. The speed differential between the output roller 43 and the main drive roller 42 keeps a page in tension as it passed through the printing station, the scanning station, or the combined printing/scanning station.

The linkage gear 104 has its single pin 85 which engages one or the other of the two pins 87, 89 on the delay coupler 81 (depending on the direction of the main drive) to drive the pick roller forwardly or rearwardly with a partial revolution delay for driving the pick roller when a directional change occurs. This relationship between the linkage gear 104 and the delay coupler 81, when combined with the speed differential between the pick roller 32 and the main drive roller 42, provides for the pin on the linkage gear 104 to walk away from engagement of the pin on the delay coupler so long as a page is in driving engagement with both the pick roller and the main drive roller. In other words, during that double driving period, the pick roller is slaved to the paper and rotates faster than the linkage gear to cause the aforesaid "walk away".

When the trailing edge of the page finally leaves the pick roller, the pick roller shaft and the delay coupler mounted thereon stop, and the time it takes for the pin on the linkage gear to rotate into engagement with the pin on the delay coupler is the "delay time" which occurs between the picking of successive pages from the stack.

Thus, the aforementioned features of the present invention provide for automated operation of a printing station, scanning station or the like from a single drive motor through a gear mechanism which provides spaced-apart picking of successive pages from an input feed stack. These aforementioned features also provide for the shared use of a paper path and mechanisms which are involved along the path by a multiple-function device which employs operations such as printing, scanning and the like in the same machine.

While specific illustrated embodiments have been shown and described, it will be appreciated by those skilled in the art that various modifications, changes and additions can be made to the methods, structures and apparatus of the invention without departing from the scope of the invention as set forth in the following claims.

## Claims

1. A multiple-function printer comprising:
a document feeder (28) for holding a stack of documents to be processed at a scanning station (22) during a scanning operation for particularly scanning a document to be sent by facsimile transmission;
a sheet feeder (26) for holding a stack of sheets to be processed at a printing station (24) during a printing operation;
common path means connected to both said document feeder (28) and said sheet feeder (26) for receiving individual document pages and individual sheet pages; and
common mechanism means (32, 34, 40, 42) for operatively interacting with said common path means to move said individual document pages past said scanning station (22) to an output (44) and to move said individual sheet pages past said printing station (24) to an output (44).

2. The multiple-function printer of claim 1 wherein said common mechanism means includes a single pick means (32) for picking a page from said document feeder (28) during said scanning operation as well as for picking a page from said sheet feeder (26) during said printing operation.

3. The multiple-function printer of claim 1 or 2, wherein said common mechanism means includes a single pressure plate feeder means (34) for holding the stack of documents against said single pick means (32) during said scanning operation and for holding the stack of sheets against said single pick means (32) during said printing operation.

4. The multiple-function printer of one of claims 1 to 3 wherein said common mechanism means includes a single drive motor (40) for driving said pick means (32) to move said individual document pages past said first station (22) during said scanning operation as well as to move said individual sheet pages past said second station (24) during said printing operation.

5. The multiple-function printer of claims 3 and 4 wherein said single drive motor (40) is connected to said pressure plate feeder means (34) in order to change the position of said pressure plate feeder means.

6. The multiple-function printer of one of the preceding claims wherein said common path means includes a common output (44) for documents processed at said scanning station (22) and for sheets processed at said printing station (24) and further includes a path for allowing a document during said scanning mode of operation to be actively processed at said scanning station (22) and to passively pass through said printing station (24) and a path for allowing a sheet during said printing mode of operation to passively pass through said scanning station (22) and to be actively processed at said printing station (24).

7. The multiple-function printer of one of the preceding claims wherein a gear mechanism is connected between said drive motor (40) on the one hand and said sheet feeder (26) and said document feeder (28) on the other hand for de-activating said sheet feeder and for activating said document feeder (28) when the multiple-function printer switches from the printing operation to the scanning operation by activation means to disengage said pick means (32) from said stack of sheets to be printed and to engage said pick means with said stack of documents to be scanned.

8. The multiple-function printer of claims 3 and 7, wherein said activation means includes first control means coupled to said pressure plate (34) to move said pressure plate from a position of engagement for holding said stacks against said pick means to a position of disengagement to allow said stacks to move away from said pick means.

9. The multiple-function device of one of claims 7 or 8, wherein said gear mechanism includes second control means coupled to said pick means (32) to reverse the direction of said pick means after said disengagement of said pick means to expel any residual sheets remaining from the picking.

10. The multiple-function printer of one of claims 7 to 9 which further includes:
a main drive roller (42);
wherein said pick means includes a pick roller (32):
wherein said gear mechanism is coupled between said drive motor (40) and said pick roller (32) to drive said pick roller at a first rate;
wherein said gear mechanism is coupled between said drive motor (40) and said main drive roller (42) to drive said main drive roller at a second rate faster than said first rate; and
wherein said gear mechanism is coupled between said drive motor and an output roller (43) to drive said output roller at a third rate faster than said second rate.

11. the multiple-function printer of one of claims 7 to 10 wherein said gear mechanism includes delay means for spacing apart successive pages which are picked from said stacks by said pick means (32).

12. The multiple-function device of claim 1 or 2, wherein said sheet feeder (26) and said document feeder (28) each include an input slot integrated into the multiple-function printer for manual loading of the stack of sheets and the stack of documents, respectively, without having to remove any input tray; and
wherein separate pressure plates (62, 66) are provided for said document feeder (60) and said sheet fedder (64), respectively.

13. A method of performing multiple functions in a printer, comprising the steps of:
automatically feeding pages from a first input stack of sheets into a first processing path by picking a sheet during a printing operation;
moving the sheet along the first processing path past a printing station where text or graphics are created on the sheet to form a printout;
delivering the printout to a first output area;
placing documents to form a second input stack;
automatically feeding pages from the second input stack of documents into a second processing path by picking a document during a scanning operation;
moving the document along the second processing path past a scanning station where text or graphics on the document are scanned;
delivering the scanned document to a second output area;
with at least a portion of said first and second processing paths being commonly used during both the printing operation and the scanning operation.

14. The method of claim 13 wherein said placing step includes forming the second input stack of documents to be at least partially overlying said first input stack of sheets, with said sheet picking step and said document picking step being performed on a portion of said first and second processing paths commonly used during both the printing operation and the scanning operation.

## Patentansprüche

1. Mehrfachfunktions-Drucker mit
einer Dokumentenzuführeinrichtung (28) zum Halten eines Stapels Dokumente, welche bei einer Scanstation (22) für einen Scanvorgang verarbeitet werden sollen, insbesondere zum Scannen eines Dokumentes, welches als Faksimile übertragen werden soll;
einer Blattzuführeinrichtung (26) zum Halten eines Stapels Blätter, welche bei einer Druckstation (24) während eines Druckvorgangs verarbeitet werden sollen;
einer gemeinsamen Pfadvorrichtung, die sowohl mit der Dokumentenzuführeinrichtung (28) als auch mit der Blattzuführeinrichtung (26) verbunden ist und einzelne Dokumentenseiten sowie einzelne Blattseiten annehmen kann; und
einem gemeinsamen Mechanismus (32, 34, 40, 42), welcher in Betrieb mit der gemeinsamen Pfadvorrichtung zusammenarbeitet, um die einzelnen Dokumentenseiten an der Scanstation (22) vorbei zu einem Ausgang (44) zu bewegen, und um die einzelnen Blattseiten an der Druckstation (24) vorbei zu einem Ausgang (44) zu bewegen.

2. Mehrfachfunktions-Drucker nach Anspruch 1, bei dem der gemeinsame Mechanismus eine einzelne Entnahmevorrichtung (32) zum Aufnehmen einer Seite von der Dokumentenzuführeinrichtung (28) während des Scanvorgangs sowie zum Aufnehmen einer Seite von der Blattzuführeinrichtung (26) während des Druckvorgangs aufweist.

3. Mehrfachfunktions-Drucker nach Anspruch 1 oder 2, bei dem der gemeinsame Mechanismus eine einzelne Druckplatten-Zuführvorrichtung (34) aufweist, um den Stapel Dokumente während des Scanvorgangs gegen die einzelne Entnahmevorrichtung (32) gedrückt zu halten und um den Stapel Blätter während des Druckvorganges gegen die einzelne Entahmevorrichtung (32) gedrückt zu halten.

4. Mehrfachfunktions-Drucker nach einem der Ansprüche 1 bis 3, bei dem der gemeinsame Mechanismus einen einzelnen Antriebsmotor (40) zum Ansteuern der Entnahmevorrichtung (32) aufweist, um die einzelnen Dokumentenseiten während des Scanvorgangs an der ersten Station (22) vorbeizubewegen und um die einzelnen Blattseiten während des Druckvorgangs an der zweiten Station (24) vorbeizubewegen.

5. Mehrfachfunktions-Drucker nach Anspruch 3 oder 4, bei dem der einzelne Antriebsmotor (40) mit der Druckplatten-Zuführvorrichtung (34) verbunden ist, um die Position der Druckplatten-Zuführvorrichtung zu verändern.

6. Mehrfachfunktions-Drucker nach einem der vorangehenden Ansprüche, bei dem die gemeinsame Pfadvorrichtung einen gemeinsamen Ausgang (44) für von der Scanstation (22) verarbeitete Dokumente und für von der Druckstation (24) verarbeitete Blätter hat sowie einen Weg, der es erlaubt, ein Dokument während des Scan-Betriebsmodus bei der Scanstation (22) aktiv zu bearbeiten und passiv durch die Druckstation (24) zu führen, und einen Weg, der es erlaubt, ein Blatt während des Druck-Betriebsmodus passiv durch die Scanstation (22) zu führen und aktiv bei der Druckstation (24) zu bearbeiten.

7. Mehrfachfunktions-Drucker nach einem der vorangehenden Ansprüche, bei dem ein Getriebemechanismus zwischen dem Antriebsmotor (40) einerseits und der Blattzuführeinrichtung (26) und der Dokumentenzuführeinrichtung (28) andererseits angeschlossen ist, um die Blattzuführeinrichtung zu deaktivieren und die Dokumentenzuführeinrichtung (28) zu aktivieren, wenn der Mehrfachfunktions-Drucker , mittels einer Aktivierungsvorrichtung, von dem Druckbetrieb in den Scanbetrieb umschaltet, um die Entnahmevorrichtung (32) von dem Stapel zu bedruckender Blätter zu lösen und mit dem Stapel zu scannender Dokumente zu verbinden.

8. Mehrfachfunktions-Drucker nach Anspruch 3 und 7, bei dem die Aktivierungsvorrichtung eine erste mit der Druckplatte (34) verbundene Steuervorrichtung aufweist, um die Druckplatte von einer Verbindungsstellung zum Halten des Stapels gegen die Entnahmevorrichtung zu einer Lösestellung zu bewegen, bei der sich der Stapel von der Entnahmevorrichtung wegbewegen kann.

9. Mehrfachfunktions-Vorrichtung nach einem der Ansprüche 7 oder 8, bei welcher der Getriebemechanismus eine zweite mit der Entnahmevorrichtung (32) verbundene Steuervorrichtung aufweist, um die Richtung der Entnahmevorrichtung nach dem Lösen der Entnahmevorrichtung umzukehren, um jegliche Restblätter, die von dem Aufnehmen noch übrig sind, abzugeben.

10. Mehrfachfunktions-Drucker nach einem der Ansprüche 7 bis 9 und mit einer Hauptantriebswalze (42);
wobei die Entnahmevorrichtung eine Aufnahmewalze (32) aufweist;
wobei der Getriebemechanismus zwischen dem Antriebsmotor (40) und der Aufnahmewalze (32) angeschlossen ist, um die Aufnahmewalze mit einer ersten Geschwindigkeit anzusteuern;
wobei der Getriebemechanismus zwischen dem Antriebsmotor (40) und der Hauptantriebswalze (42) angeschlossen ist, um die Hauptantriebswalze mit einer zweiten Geschwindigkeit anzusteuern, die schneller als die erste Geschwindigkeit ist; und
wobei der Getriebemechanismus zwischen dem Antriebsmotor und einer Ausgabewalze (43) angesteuert ist, um die Ausgabewalze mit einer dritten Geschwindigkeit anzusteuern, welche schneller als die zweite Geschwindigkeit ist.

11. Mehrfachfunktions-Drucker nach einem der Ansprüche 7 bis 10, bei dem der Getriebemechanismus eine Verzögerungsvorrichtung aufweist, um aufeinanderfolgende Seiten, welche die Entnahmevorrichtung (32) von den Stapeln aufnimmt, auseinanderzuziehen.

12. Mehrfachfunktions-Vorrichtung nach Anspruch 1 oder 2, bei der die Blattzuführeinrichtung (26) und die Dokumentenzuführeinrichtung (28) jeweils einen Eingangsschlitz aufweisen, der in den Mehrfachfunktions-Drucker eingebaut ist, um den Stapel Blätter bzw. den Stapel Dokumente manuell einzulegen, ohne daß das Eingabetablett entfernt werden muß;
wobei getrennte Druckplatten (26, 66) für die Dokumentenzuführeinrichtung (60) bzw. die Blattzuführeinrichtung (64) vorgesehen sind.

13. Verfahren zum Ausführen mehrerer Funktionen in einem Drucker, mit folgenden Verfahrensschritten:
automatisches Zuführen von Seiten von einem ersten Eingabestapel aus Blättern in einen ersten Verarbeitungspfad durch Aufnehmen eines Blattes während eines Druckvorgangs;
Bewegen des Blattes entlang des ersten Verarbeitungspfades an einer Druckstation vorbei, wo Text oder Graphik auf dem Blatt erzeugt werden, um einen Ausdruck zu bilden;
Liefern des Ausdrucks zu einem ersten Ausgabebereich;
Ablegen von Dokumenten, um einen zweiten Eingangsstapel zu bilden;
automatisches Zuführen von Seiten des zweiten Eingangsstapels aus den Dokumenten in einen zweiten Verarbeitungspfad durch Aufnehmen eines Dokumentes während eines Scanvorgangs;
Bewegen des Dokumentes entlang des zweiten Verarbeitungspfades an einer Scanstation vorbei, wo Text oder Graphik auf dem Dokument abgetastet werden;
Liefern des abgetasteten Dokumentes zu einem zweiten Ausgabebereich;
wobei wenigstens ein Teil des ersten und des zweiten Verarbeitungspfades während sowohl des Druckvorgangs als auch des Scanvorgangs gemeinsam genutzt werden.

14. Verfahren nach Anspruch 13, bei dem bei dem Ablegen der zweite Eingangsstapel aus Dokumenten so gebildet wird, daß er wenigstens teilweise über dem ersten Eingangsstapel aus Blättern liegt, wobei das Aufnehmen der Blätter und das Aufnehmen der Dokumente bei einem Teil des ersten und des zweiten Verarbeitungspfades ausgeführt wird, welcher während des Druckvorgangs und des Scanvorgangs gemeinsam genutzt wird.

## Revendications

1. Imprimante à multiples fonctions comprenant :
un dispositif d'alimentation en documents (28) pour supporter une pile de documents à traiter au niveau d'une station de balayage (22) pendant une opération de balayage pour balayer de façon particulière un document à envoyer au moyen d'une transmission par télécopie ;
un dispositif d'alimentation en feuilles (26) pour supporter une pile de feuilles à traiter au niveau d'une station d'impression (24) pendant une opération d'impression ;
un moyen formant voie commune connecté à la fois audit dispositif d'alimentation en documents (28) et audit dispositif d'alimentation en feuilles (26) pour recevoir des pages de document individuelles et des pages de feuille individuelles ; et
un moyen formant mécanisme commun (32, 34, 40, 42) pour interagir en fonctionnement avec ledit moyen formant voie commune pour déplacer lesdites pages de document individuelles au travers de ladite station de balayage (22) jusqu'à une sortie (44) et pour déplacer lesdites pages de feuille individuelles au travers de ladite station d'impression (24) jusqu'à une sortie (44).

2. Imprimante à multiples fonctions selon la revendication 1, dans laquelle ledit moyen formant mécanisme commun inclut un unique moyen de saisie (32) pour saisir une page à partir dudit dispositif d'alimentation en documents (28) pendant ladite opération de balayage ainsi que pour saisir une page à partir dudit dispositif d'alimentation en feuilles (26) pendant ladite opération d'impression.

3. Imprimante à multiples fonctions selon la revendication 1 ou 2, dans laquelle ledit moyen formant mécanisme commun inclut un unique moyen de dispositif d'alimentation à plaque de pression (34) pour supporter la pile de documents contre ledit unique moyen de saisie (32) pendant ladite opération de balayage et pour supporter la pile de feuilles contre ledit unique moyen de saisie (32) pendant ladite opération d'impression.

4. Imprimante à multiples fonctions selon l'une des revendications 1 à 3, dans laquelle ledit moyen formant mécanisme commun inclut un unique moteur d'entraînement (40) pour entraîner ledit moyen de saisie (32) pour déplacer lesdites pages de document individuelles au travers de ladite première station (22) pendant ladite opération de balayage ainsi que pour déplacer lesdites pages de feuille individuelles au travers de ladite seconde station (24) pendant ladite opération d'impression.

5. Imprimante à multiples fonctions selon les revendications 3 et 4, dans laquelle ledit unique moteur d'entraînement (40) est connecté audit moyen formant dispositif d'alimentation à plaque de pression (34) afin de modifier la position dudit moyen formant dispositif d'alimentation à plaque de pression.

6. Imprimante à multiples fonctions selon l'une quelconque des revendications précédentes, dans laquelle ledit moyen formant voie commune inclut une sortie commune (44) pour des documents traités au niveau de ladite station de balayage (22) et pour des feuilles traitées au niveau de ladite station d'impression (24) et inclut en outre une voie pour permettre un traitement actif au niveau de ladite station de balayage (22) d'un document et pour permettre son passage passif au travers de ladite station d'impression (24) pendant ledit mode de fonctionnement en balayage et une voie pour permettre le passage passif d'une feuille au travers de ladite station de balayage (22) et son traitement actif au niveau de ladite station d'impression (24) pendant ledit mode de fonctionnement en impression .

7. Imprimante à multiples fonctions selon l'une quelconque des revendications précédentes, dans laquelle un mécanisme d'engrenage est connecté entre ledit moteur d'entraînement (40) d'une part et ledit dispositif d'alimentation en feuilles (26) et ledit dispositif d'alimentation en documents (28) d'autre part pour désactiver ledit dispositif d'alimentation en feuilles et pour activer ledit dispositif d'alimentation en documents (28) lorsque l'imprimante à multiples fonctions est commutée depuis l'opération d'impression sur l'opération de balayage à l'aide d'un moyen d'activation pour désengager ledit moyen de saisie (32) de ladite pile de feuilles à imprimer et pour engager ledit moyen de saisie avec ladite pile de documents à balayer.

8. Imprimante à multiples fonctions selon les revendications 3 et 7, dans laquelle ledit moyen d'activation inclut un premier moyen de commande couplé à ladite plaque de pression (34) pour déplacer ladite plaque de pression depuis une position d'engagement pour supporter lesdites piles contre ledit moyen de saisie jusqu'à une position de désengagement pour permettre auxdites piles de s'éloigner dudit moyen de saisie.

9. Imprimante à multiples fonctions selon l'une quelconque des revendications 7 et 8, dans laquelle ledit mécanisme d'engrenage inclut un second moyen de commande couplé audit moyen de saisie (32) pour inverser le sens dudit moyen de saisie après ledit désengagement dudit moyen de saisie pour expulser de quelconques feuilles résiduelles subsistant après la saisie.

10. Imprimante à multiples fonctions selon l'une quelconque des revendications 7 à 9, laquelle inclut en outre :
un rouleau d'entraînement principal (42),
dans laquelle ledit moyen de saisie inclut un rouleau de saisie (32),
dans laquelle ledit mécanisme d'engrenage est couplé entre ledit moteur d'entraînement (40) et ledit rouleau de saisie (32) pour entraîner ledit rouleau de saisie à une première vitesse,
dans laquelle ledit mécanisme d'engrenage est couplé entre ledit moteur d'entraînement (40) et ledit rouleau d'entraîne ment principal (42) pour entraîner ledit rouleau d'entraînement principal à une seconde vitesse plus rapide que ladite première vitesse, et
dans laquelle ledit mécanisme d'engrenage est coupé entre ledit moteur d'entraînement et un rouleau de sortie (43) pour entraîner ledit rouleau de sortie à une troisième vitesse plus rapide que ladite seconde vitesse.

11. Imprimante à multiples fonctions selon l'une quelconque des revendications 7 à 10, dans laquelle ledit mécanisme d'engrenage inclut un moyen de retard pour espacer des pages successives qui sont saisies depuis lesdites piles par ledit moyen de saisie (32).

12. Imprimante à multiples fonctions selon la revendication 1 ou 2, dans laquelle ledit dispositif d'alimentation en feuilles (26) et ledit dispositif d'alimentation en documents (28) incluent chacun une fente d'entrée intégrée dans l'imprimante à multiples fonctions pour respectivement un chargement manuel de la pile de feuilles et de la pile de documents sans avoir à ôter un quelconque plateau d'entrée ; et
dans laquelle des plaques de pression séparées (62, 66) sont prévues respectivement pour ledit dispositif d'alimentation en documents (60) et pour ledit dispositif d'alimentation en feuilles (64).

13. Procédé de réalisation de multiples fonctions dans une imprimante, comprenant les étapes de :
alimentation automatique de pages depuis une première pile d'entrée de feuilles dans une première voie de traitement en saisissant une feuille pendant une opération d'impression ;
déplacement de la feuille le long de la première voie de traitement au travers d'une station d'impression où un texte ou des graphiques sont créés sur la feuille afin de former une impression en sortie ;
délivrance de l'impression en sortie dans une première zone de sortie ;
placement de documents afin de former une seconde pile d'entrée ;
alimentation automatique de pages depuis la seconde pile d'entrée de documents dans une seconde voie de traitement en saisissant un document pendant une opération de balayage ;
déplacement du document le long de la seconde voie de traitement au travers d'une station de balayage où un texte ou des graphiques sur le document sont balayés ;
délivrance du document balayé dans une seconde zone de sortie ;
au moins une partie desdites première et seconde voies de traitement étant utilisée en commun pendant à la fois l'opération d'impression et l'opération de balayage.

14. Procédé selon la revendication 13, dans lequel ladite étape de placement inclut la formation de la seconde pile d'entrée de documents de telle sorte qu'elle chevauche au moins partiellement ladite première pile d'entrée de feuilles, ladite étape de saisie de feuille et ladite étape de saisie de document étant réalisées sur une partie desdites première et seconde voies de traitement utilisée en commun pendant à la fois l'opération d'impression et l'opération de balayage.
